# FASCICULE DE BREVET EUROPEEN

(11) **EP 4 495 008 B1**
(45) Date de publication et mention de la délivrance du brevet: **15.04.2026**
(21) Numéro de dépôt: 24188788.4
(22) Date de dépôt: 16.07.2024
(51) Int. Cl.: B64D 29/00, B64D 29/08, B64D 37/30, B64D 37/34, B64D 37/32

(54) **NACELLE D AÉRONEF COMPORTANT UN CAISSON ÉTANCHE ET UNE PORTE OUVRANT LE CAISSON SUR L EXTÉRIEUR**
FLUGZEUGGONDEL MIT EINEM ABGEDICHTETEN GEHÄUSE UND EINER TÜR, DIE DAS GEHÄUSE NACH AUSSEN ÖFFNET
AIRCRAFT NACELLE COMPRISING A WATERTIGHT BOX AND A DOOR OPENING THE BOX ON THE OUTSIDE

(30) Priorité: 18.07.2023 FR 2307702
(43) Date de publication de la demande: 22.01.2025
(73) Titulaire: Airbus Operations (S.A.S.), 31060 Toulouse Cedex 9 (FR)
(72) Inventeur: CZAPLA, Lionel, 31060 TOULOUSE (FR); LABARTHE, Christophe, 31060 TOULOUSE (FR); FUKASAKU, Kotaro, 31060 TOULOUSE (FR)
(74) Mandataire: Cabinet Le Guen Maillet

(56) Documents cités:
- GB-A- 2 403 774
- US-A1- 2022 396 367
- US-A1- 2023 043 843

## Description

### DOMAINE TECHNIQUE

La présente invention concerne une nacelle d'aéronef comportant un caisson étanche et une porte qui s'ouvre pour permettre la communication entre l'intérieur du caisson et l'extérieur de l'aéronef, ainsi qu'un aéronef comportant une telle nacelle.

### ÉTAT DE LA TECHNIQUE ANTÉRIEURE

Afin de réduire les émissions de dioxyde de carbone (CO₂) des moteurs d'aéronef, il est connu d'utiliser le dihydrogène comme carburant. L'aéronef comporte alors un réservoir de dihydrogène, et au moins un moteur alimenté par ledit dihydrogène grâce à des canalisations qui courent dans l'aéronef, entre le réservoir et chaque moteur et sur lesquelles des pompes, des réchauffeurs et des vannes sont installés.

La sécurité doit être assurée si un incident intervient sur la ligne d'alimentation entre le réservoir et le moteur. Pour cela, il est connu de mettre en place différents systèmes de sécurité. Par exemple, il est connu de mettre en place des systèmes de ventilation qui ventilent les espaces dans lesquels des fuites de dihydrogène peuvent arriver.

Les documents US-A-2022/396367 et GB-A-2,403,774 divulguent des nacelles de l'état de la technique.

Bien qu'un tel arrangement soit performant, la mise en place de tels systèmes de ventilation dans une nacelle entraîne une augmentation des coûts et de la masse de la nacelle.

### EXPOSE DE L'INVENTION

Un objet de la présente invention est de proposer une nacelle comportant un caisson étanche logé dans la nacelle, et où le capot de la nacelle présente une porte qui s'ouvre entre l'intérieur du caisson et l'extérieur.

À cet effet, est proposée une nacelle d'aéronef comportant :
- une structure,
- un capot monté sur la structure, présentant une face intérieure orientée vers l'intérieur de la nacelle et présentant au moins une fenêtre,
- un caisson fixé autour de la au moins une fenêtre de manière étanche à la face intérieure de manière à délimiter avec le capot un volume intérieur destiné à contenir un dispositif de conditionnement prévu pour conditionner du dihydrogène,
- pour la ou chaque fenêtre, une porte montée articulée sur ledit capot entre une position fermée dans laquelle la porte obture la fenêtre et une position ouverte dans laquelle la porte n'obture pas la fenêtre,
- des moyens de détection prévus pour détecter la présence de dihydrogène dans le caisson et pour délivrer des informations représentatives d'une telle présence, et
- une unité de contrôle
la nacelle étant caractérisé en ce qu'elle comporte pour chaque porte, un système de manœuvre comportant des moyens pour déplacer la porte de la position fermée à la position ouverte, en ce que l'unit de contrôle est arrangée pour commander le système de manœuvre en ouverture en fonction des informations délivrées par les moyens de détection, et en ce que le capot est monté articulé sur la structure entre une position ouverte et une position fermée. Avec un tel arrangement, si du dihydrogène est détecté dans le caisson, la porte s'ouvre pour permettre l'évacuation du dihydrogène vers l'extérieur de l'aéronef et le capot articulé peut être ouvert par exemple à des fins de maintenance.

Avantageusement, le capot présente une trappe montée articulée sur le capot entre une position ouverte et une position fermée.

Avantageusement, le caisson est inerté.

Avantageusement, le système de manœuvre comporte des charnières disposées le long d'un premier bord de la porte.

Selon un mode de réalisation particulier, ledit premier bord est parallèle à un sens de déplacement de la nacelle.

Selon un autre mode de réalisation particulier, il y a au moins deux portes disposées l'une derrière l'autre par rapport à un sens de déplacement de la nacelle, le premier bord de la porte la plus devant est à l'arrière de ladite porte et le premier bord de la porte la plus derrière est à l'avant de ladite porte.

Avantageusement, la nacelle comporte un moyen limitant assurant le blocage en ouverture de la porte.

L'invention propose également un aéronef comportant un réservoir de dihydrogène, une nacelle selon l'une des variantes précédentes, un dispositif de conditionnement disposé dans le caisson, une canalisation fluidiquement connectée entre le réservoir et le dispositif de conditionnement, une vanne d'arrêt montée sur la canalisation et commandée en ouverture et en fermeture par l'unité de contrôle.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en coupe d'une nacelle selon un premier mode de réalisation de l'invention,
[Fig. 3] est une vue en coupe d'une nacelle selon un deuxième mode de réalisation de l'invention,
[Fig. 4] est une vue en coupe d'une nacelle selon un arrangement particulier de l'invention,
[Fig. 5] est une vue en coupe d'une nacelle selon un autre arrangement particulier de l'invention, et
[Fig. 6] illustre schématiquement un exemple d'une unité de contrôle mise en œuvre dans l'invention.

### EXPOSÉ DÉTAILLÉ DE MODES DE RÉALISATION

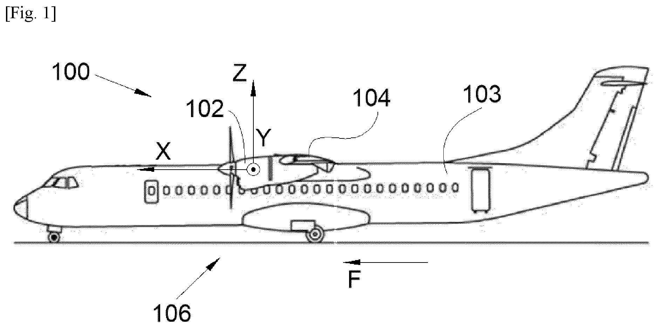

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 103 de chaque côté duquel est fixée une aile 104 qui porte au moins un moteur 106 fonctionnant avec du dihydrogène comme carburant. Dans le mode de réalisation de l'invention présenté à la Fig. 1, le moteur 106 est un moteur à hélice, mais tout autre type de moteur est envisageable. En particulier, le moteur 106 peut fonctionner par combustion directe de dihydrogène ou être un moteur électrique alimenté par une pile à combustible alimentée en dihydrogène.

Le moteur 106 est logé dans une nacelle 102.

La flèche F indique le sens de déplacement, c'est-à-dire la direction en marche avant, de l'aéronef 100 et donc de la nacelle 102 lorsque les moteurs 106 sont en fonctionnement.

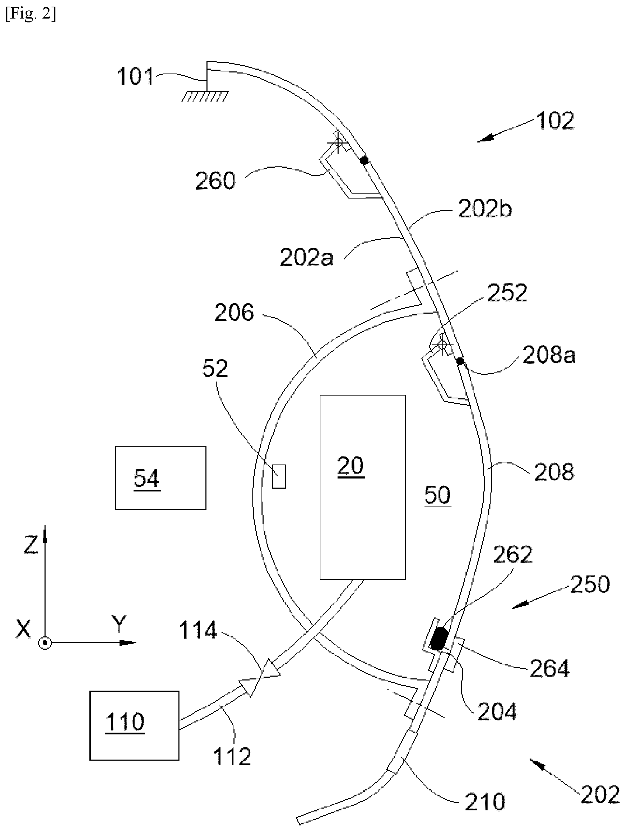

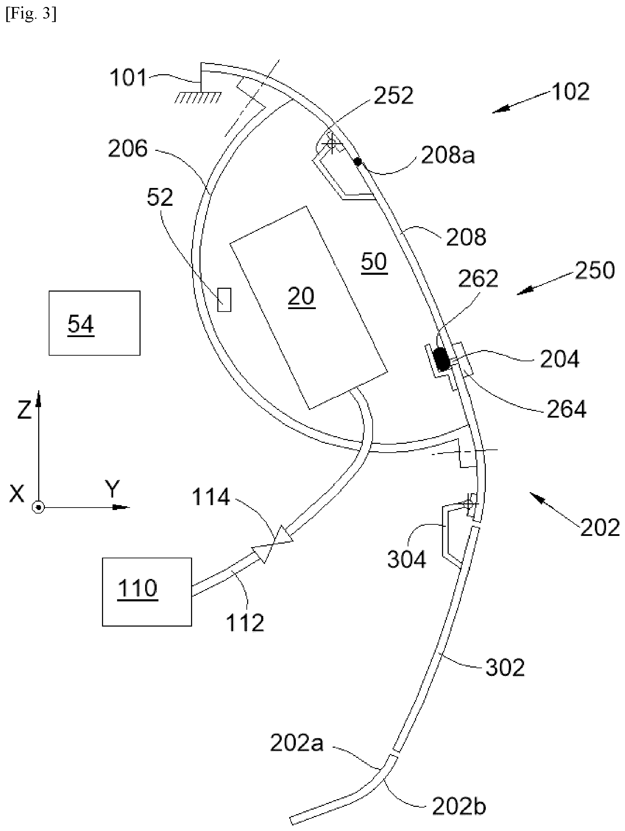

Les Figs. 2 et 3 montrent des coupes par un plan perpendiculaire à la direction longitudinale de la nacelle 102 selon deux modes de réalisation.

L'aéronef 100 comporte au moins un réservoir 110 dans lequel est stocké le dihydrogène, préférentiellement sous forme liquide. Le réservoir 110 peut être disposé dans le fuselage 103 ou dans les ailes 104.

L'aéronef 100 comporte des dispositifs de conditionnement 20 qui servent à conditionner ledit dihydrogène avant qu'il soit consommé par le moteur 106. De tels dispositifs de conditionnement 20 sont par exemple des vannes, des réchauffeurs, des pompes, etc. Chaque dispositif de conditionnement 20 est alimenté en dihydrogène par une canalisation 112 qui vient directement ou indirectement du réservoir 110 et est ainsi fluidiquement connectée entre le réservoir 110 et le dispositif de conditionnement 20.

La nacelle 102 comporte une structure 101 sur laquelle sont montés des capots 202. Chaque capot 202 constitue la séparation entre l'intérieur de la nacelle 102 et l'extérieur de l'aéronef 100 et il comporte une face intérieure 202a orientée vers l'intérieur de la nacelle 102 et une face extérieure orientée vers l'extérieur de l'aéronef 100.

La nacelle 102 comporte également un caisson 206 fixé de manière étanche à la face intérieure 202a de manière à délimiter avec le capot 202 un volume intérieur 50 dans lequel est disposé le dispositif de conditionnement 20. La fixation étanche assure que si du dihydrogène est présent dans le volume intérieur 50, il ne peut pas se répandre dans la nacelle 102 à travers la paroi du caisson 206. La canalisation 112 traverse de manière étanche la paroi du caisson 206.

Le capot 202 est percé d'au moins une fenêtre 204 qui assure la communication fluidique entre le volume intérieur 50 et l'extérieur de l'aéronef 100. Le caisson 206 débouche ainsi à l'extérieur de l'aéronef 100 à travers ladite au moins une fenêtre 204.

Le caisson 206 est fixé autour de ladite au moins une fenêtre 204. La fixation du caisson 206 au capot 202 est assurée par tous moyens appropriés comme des vis, des rivets, de la soudure, etc.

Pour chaque fenêtre 204, la nacelle 102 comporte une porte 208 montée articulée sur le capot 202 entre une position fermée dans laquelle la porte 208 obture la fenêtre 204 et une position ouverte dans laquelle la porte 208 n'obture pas la fenêtre 204. En position fermée, le volume intérieur 50 est donc étanche vis-à-vis de l'extérieur de l'aéronef 100 et en position ouverte, le volume intérieur 50 communique avec l'extérieur de l'aéronef 100, en particulier pour évacuer le dihydrogène qui serait présent dans le caisson 206.

Pour manœuvrer chaque porte 208, la nacelle 102 comporte un système de manœuvre 250 qui comporte des moyens pour déplacer la porte 208 de la position fermée à la position ouverte. La manœuvre de la porte 208 vers la position ouverte est conditionnée à la présence de dihydrogène dans le caisson 206. À cette fin, la nacelle 102 comporte également des moyens de détection 52 qui sont agencés dans le caisson 206 et qui sont prévus pour détecter la présence de dihydrogène dans le caisson 206. Les moyens de détection 52 sont également prévus pour délivrer des informations représentatives d'une telle présence de dihydrogène dans le caisson 206.

La nacelle 102 comporte également une unité de contrôle 54 qui est en communication avec les moyens de détection 52 et le système de manœuvre 250. L'unité de contrôle 54 est arrangée pour commander le système de manœuvre 250 en ouverture en fonction des informations délivrées par les moyens de détection 52, c'est-à-dire pour commander le système de manœuvre 250 afin qu'il déplace la porte 208 de la position fermée à la position ouverte lorsque les moyens de détection 52 détectent la présence de dihydrogène et délivre le message correspondant à l'unité de contrôle 54.

Ainsi, avec une telle nacelle 102, lorsque du dihydrogène est détecté dans un caisson 206, son étanchéité vis-à-vis du reste de la nacelle 102 empêche l'écoulement du dihydrogène vers le reste de la nacelle 102 et après détection par les moyens de détection 52, l'unité de contrôle 54 commande l'ouverture de la porte 208 correspondante pour évacuer le dihydrogène vers l'extérieur de l'aéronef 100.

Une telle installation ne nécessite donc aucun système de ventilation complémentaire qui pourrait alourdir la nacelle 102.

Le dispositif de conditionnement 20 est fixé à la paroi du caisson 206 et/ou à la porte 208. Selon un mode de réalisation particulier, les moyens du système de manœuvre 250 sont également prévus pour déplacer la porte 208 de la position ouverte à la position fermée, par exemple lorsque les moyens de détection 52 ne détectent plus de dihydrogène dans le caisson 206. Un tel arrangement permet de refermer la porte 208 afin de limiter la traînée en vol. Selon un mode de réalisation particulier, le caisson 206 est inerté, soit par une mise au vide, soit par introduction d'un gaz inerte.

Pour arrêter l'écoulement du dihydrogène dans la canalisation 112 et ne plus alimenter le dispositif de conditionnement 20 présent dans le caisson 206 dans lequel une fuite de dihydrogène a été détectée, l'aéronef 100 comporte une vanne d'arrêt 114 montée sur la canalisation 112 et commandée en ouverture et en fermeture par l'unité de contrôle 54 en particulier en fonction des informations transmises par les moyens de détection 52.

La vanne d'arrêt 114 est disposée hors du caisson 206 et en amont de celui-ci sur la canalisation 112 afin d'empêcher un écoulement continu de dihydrogène dans le caisson 206. Ainsi, lorsque du dihydrogène est détecté dans le caisson 206 par les moyens de détection 52, l'unité de contrôle 54 commande la fermeture de la vanne d'arrêt 114 de préférence avant l'ouverture de la porte 208.

Les moyens de détection 52 peuvent prendre différentes formes et peuvent être constitués d'un ou plusieurs capteurs de pression disposés dans le caisson 206. Ainsi, si un capteur de pression détecte une variation de pression dans le caisson 206 qui est sous vide ou sous une pression connue d'un gaz inerte, cela signifie qu'il y a une fuite de dihydrogène. Les moyens de détection 52 peuvent être complétés par des capteurs de détection adaptés à la détection du dihydrogène et l'analyse des données transmises par ces capteurs de détection permet de savoir s'il y a une fuite de dihydrogène.

Dans le mode de réalisation de la Fig. 2, le capot 202 sur lequel sont installés le caisson 206 et la porte 208 est un capot qui est monté mobile sur la structure 101. À cette fin, la nacelle 102 comporte des charnières principales 260 qui assurent l'articulation du capot 202 sur la structure 101 et la mobilité dudit capot 202 entre une position ouverte et une position fermée et inversement.

Classiquement, le capot 202 est équipé d'un verrou qui verrouille ledit capot 202 avec la structure 101 en position fermée.

Lorsque le capot 202 doit être ouvert, par exemple lors d'opérations de maintenance, il est nécessaire d'arrêter l'alimentation en dihydrogène du dispositif de conditionnement 20 associé audit capot 202 en fermant la vanne d'arrêt 114 et déconnecter la canalisation 112. À cette fin, le capot 202 présente une trappe 210 qui est montée articulée sur le capot 202 entre une position ouverte et une position fermée pour permettre à un technicien d'accéder à l'intérieur de la nacelle 102.

Bien sûr, la trappe 210 est positionnée de manière à permettre à un technicien d'accéder à la vanne d'arrêt 114 et à la canalisation 112 lorsque ladite trappe 210 est en position ouverte. Classiquement, selon un mode de réalisation particulier, la trappe 210 est équipée de charnières et d'un verrou qui permet l'articulation de la trappe 210 sur le capot 202 et le verrouillage de ladite trappe 210 avec ledit capot 202 en position fermée.

Dans le mode de réalisation de la Fig. 3, le capot 202 est monté fixe sur la structure 101 et la nacelle 102 comporte ici un capot mobile 302 qui est monté articulé sur le capot 202 ici par l'intermédiaire de charnières secondaires 304 qui assurent l'articulation du capot mobile 302 entre une position ouverte et une position fermée et inversement.

Classiquement, le capot mobile 302 est équipé d'un verrou qui verrouille ledit capot mobile 302 avec le capot 202 en position fermée.

Dans le mode de réalisation de l'invention présenté sur les Figs. 2 et 3, le système de manœuvre 250 comporte des charnières 252 disposées le long d'un premier bord 208a de la porte 208. Les charnières 252 prennent ici la forme de ferrures en col de cygne.

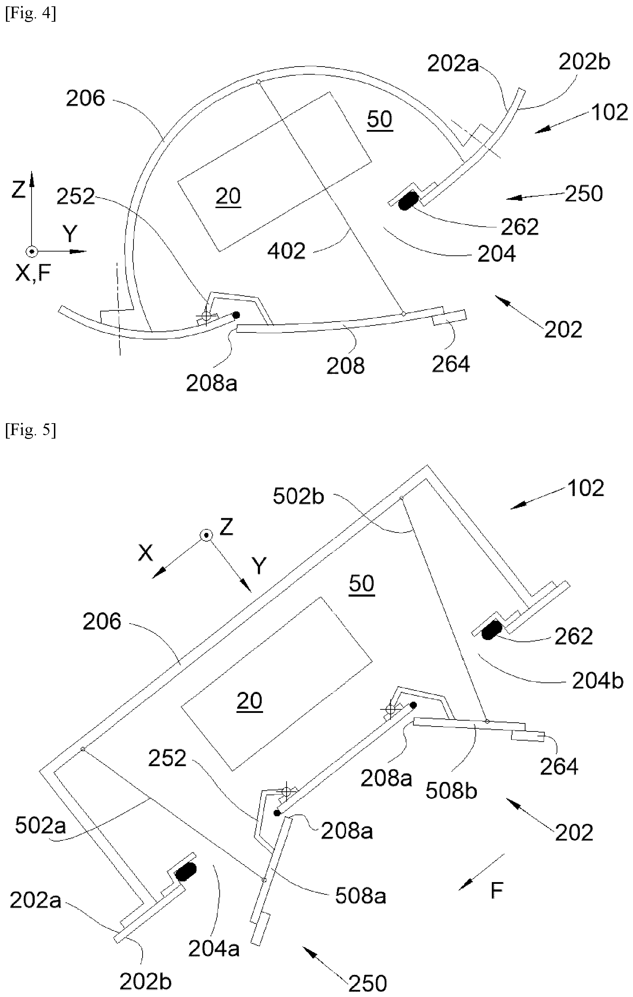

La Fig. 4 montre un mode de réalisation de l'invention dans lequel il y a une seule porte 208 par caisson 206.

Dans ce mode de réalisation, le premier bord 208a est parallèle au sens de déplacement F. Dans le mode de réalisation de la Fig. 4, le premier bord 208a est un bord inférieur de la porte 208, mais dans un autre mode de réalisation non représenté, le premier bord 208a peut être un bord supérieur de la porte 208.

Selon la position du premier bord 208a, la porte 208 s'ouvre alors autour d'un axe de charnière globalement horizontal et parallèle à la direction longitudinale X.

La Fig. 5 montre un mode de réalisation de l'invention dans lequel il y a deux portes 508a-b par caisson 206. Les deux portes 508a-b sont disposées l'une derrière l'autre par rapport au sens de déplacement F de la nacelle 102 et il y a donc ainsi une porte avant 508a et une porte arrière 508b.

Le premier bord 208a de la porte 508a la plus devant est alors à l'arrière de ladite porte 508a et le premier bord 208a de la porte 508b la plus derrière est alors à l'avant de ladite porte 508b. Chaque premier bord 208a est alors globalement perpendiculaire au sens de déplacement F.

Ainsi, lorsque les portes 508a-b sont ouvertes, l'air extérieur s'engouffre dans le volume intérieur 50 par la fenêtre 204a correspondant à la porte avant 508a et ressort du volume intérieur 50 par la fenêtre 204b correspondant à la porte arrière 508b.

La position de la porte avant 508a aide à l'entrée de l'air extérieur dans le volume intérieur 50.

Le système de manœuvre 250 comporte également un élément actif permettant de déplacer la porte 208, 508a-b. Cet élément actif commandé par l'unité de contrôle 54 est par exemple un vérin (hydraulique, pneumatique, électrique) monté entre la porte 208, 508a-b et la paroi du caisson 206 par exemple ou un moteur électrique monté au niveau des charnières 252 par exemple.

Pour limiter l'ouverture de la porte 208, 508a-b en deçà d'un angle d'ouverture, la nacelle 102 comporte un moyen limitant 402, 502a-b assurant le blocage en ouverture de la porte 208, 508a-b.

Le moyen limitant 402, 502a-b peut être une bielle ou un câble fixé entre la porte 208, 508a-b et la paroi du caisson 206. Le moyen limitant 402, 502a-b peut également être le vérin du système de manœuvre 250.

Pour assurer une bonne étanchéité au niveau du volume intérieur 50, des joints 262 sont prévus le long des bords de la porte 208, 508a-b.

La porte 208, 508a-b peut être avantageusement équipée d'un verrou 264 qui verrouille ladite porte 208, 508a-b au capot 202 en position fermée.

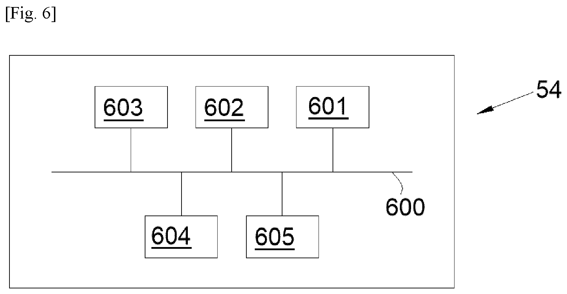

La Fig. 6 illustre schématiquement un exemple d'une unité de contrôle 54 mise en œuvre dans l'invention.

L'unité de contrôle 54 comporte, reliés par un bus de communication 600 : un processeur ou CPU (« Central Processing Unit » en anglais) 601 ; une mémoire vive RAM (« Read-Only Memory » en anglais) 602 ; une mémoire morte 603, par exemple de type ROM (« Read Only Memory » en anglais) ou EEPROM (« Electrically-Erasable Programmable ROM » en anglais), telle qu'une mémoire Flash ; une unité de stockage, telle qu'un disque dur HDD (« Hard Disk Drive » en anglais) 604, ou un lecteur de support de stockage, tel qu'un lecteur de cartes SD (« Secure Digital » en anglais) ; et un gestionnaire d'interfaces I/f 605.

Le gestionnaire d'interfaces I/f 605 permet à l'unité de contrôle 54 d'interagir avec les autres composants comme les moyens de détection 52, la vanne d'arrêt 114, le système de manœuvre 250, etc.

Le processeur 401 est capable d'exécuter des instructions chargées dans la mémoire vive 402 à partir de la mémoire morte 403, d'une mémoire externe, d'un support de stockage (tel qu'une carte SD), ou d'un réseau de communication. Lorsque l'unité de contrôle 220 est mise sous tension, le processeur 401 est capable de lire de la mémoire vive 402 des instructions et de les exécuter. Ces instructions forment un programme d'ordinateur causant l'implémentation, par le processeur 401, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple, un composant FPGA (« Field Programmable Gate Array » en anglais) ou ASIC (« Application Specific Integrated Circuit » en anglais). D'une manière générale, l'unité de contrôle 220 comporte de la circuiterie électronique adaptée et configurée pour implémenter les fonctionnements, procédés et étapes décrits ici.

## Revendications

1. Nacelle (102) d'aéronef (100) comportant :
- une structure (101),
- un capot (202) monté sur la structure (101), présentant une face intérieure (202a) orientée vers l'intérieur de la nacelle (102) et présentant au moins une fenêtre (204),
- un caisson (206) fixé autour de la au moins une fenêtre (204) de manière étanche à la face intérieure (202a) de manière à délimiter avec le capot (202) un volume intérieur (50) destiné à contenir un dispositif de conditionnement (20) prévu pour conditionner du dihydrogène,
- pour la ou chaque fenêtre (204), une porte (208, 508a-b) montée articulée sur ledit capot (202) entre une position fermée dans laquelle la porte (208, 508a-b) obture la fenêtre (204) et une position ouverte dans laquelle la porte (208, 508a-b) n'obture pas la fenêtre (204),
- des moyens de détection (52) prévus pour détecter la présence de dihydrogène dans le caisson (206) et pour délivrer des informations représentatives d'une telle présence, et
- une unité de contrôle (54),
la nacelle (102) comportant pour chaque porte (208, 508a-b), un système de manœuvre (250) comportant des moyens pour déplacer la porte (208, 508a-b) de la position fermée à la position ouverte, unité de contrôle (54) étant est arrangée pour commander le système de manœuvre (250) en ouverture en fonction des informations délivrées par les moyens de détection (52) et la nacelle (102) étant **caractérisé en ce que** le capot (202) est monté articulé sur la structure (101) entre une position ouverte et une position fermée.

2. Nacelle (102) d'aéronef (100) selon la revendication 1, **caractérisée en ce que** le capot (202) présente une trappe (210) montée articulée sur le capot (202) entre une position ouverte et une position fermée.

3. Nacelle (102) d'aéronef (100) selon l'une des revendications 1 ou 2, **caractérisée en ce que** le caisson (206) est inerté.

4. Nacelle (102) d'aéronef (100) selon l'une des revendications 1 à 3, **caractérisée en ce que** le système de manœuvre (250) comporte des charnières (252) disposées le long d'un premier bord (208a) de la porte (208, 508a-b).

5. Nacelle (102) d'aéronef (100) selon la revendication 4, **caractérisée en ce que** ledit premier bord (208a) est parallèle à un sens de déplacement (F) de la nacelle (102).

6. Nacelle (102) d'aéronef (100) selon la revendication 4, **caractérisée en ce qu'**il y a au moins deux portes (508a-b) disposées l'une derrière l'autre par rapport à un sens de déplacement (F) de la nacelle (102), **en ce que** le premier bord (208a) de la porte (508a) la plus devant est à l'arrière de ladite porte (508a) et **en ce que** le premier bord (208a) de la porte (508b) la plus derrière est à l'avant de ladite porte (508b).

7. Nacelle (102) d'aéronef (100) selon l'une des revendications 1 à 6, **caractérisée en ce qu'**elle comporte un moyen limitant (402, 502a-b) assurant le blocage en ouverture de la porte (208, 508a-b).

8. Aéronef (100) comportant un réservoir (110) de dihydrogène, une nacelle (102) selon l'une des revendications précédentes, un dispositif de conditionnement (20) disposé dans le caisson (106), une canalisation (112) fluidiquement connectée entre le réservoir (110) et le dispositif de conditionnement (20), une vanne d'arrêt (114) montée sur la canalisation (112) et commandée en ouverture et en fermeture par l'unité de contrôle (54).

## Patentansprüche

1. Gondel (102) eines Luftfahrzeugs (100), umfassend:
- eine Struktur (101),
- eine Verkleidung (202), die an der Struktur (101) montiert ist, eine zum Innenraum der Gondel (102) gerichtete Innenseite (202a) aufweist und mindestens ein Fenster (204) aufweist,
- einen Kasten (206), der um das mindestens ein Fenster (204) dicht an der Innenseite (202a) befestigt ist, so dass er mit der Verkleidung (202) ein Innenvolumen (50) begrenzt, das dazu bestimmt ist, eine zum Konditionieren von Diwasserstoff vorgesehene Konditionierungsvorrichtung (20) zu enthalten,
- für das oder jedes Fenster (204) eine Tür (208, 508a-b), die an der Verkleidung (202) zwischen einer geschlossenen Stellung, in der die Tür (208, 508a-b) das Fenster (204) verschließt, und einer geöffneten Stellung, in der die Tür (208, 508a-b) das Fenster (204) nicht schließt, gelenkig montiert ist;
- Detektionsmittel (52), die dazu vorgesehen sind, das Vorhandensein von Diwasserstoff in dem Kasten (206) zu detektieren und Informationen auszugeben, die für ein solches Vorhandensein repräsentativ sind, und
- eine Steuereinheit (54),
wobei die Gondel (102) für jede Tür (208, 508a-b) ein Betätigungssystem (250) umfasst, das Mittel zum Verlagern der Tür (208, 508a-b) aus der geschlossenen Stellung in die geöffnete Stellung umfasst, wobei die Steuereinheit (54) dazu ausgebildet ist, das Betätigungssystem (250) in Abhängigkeit von den von der Detektionsmitteln (52) ausgegebenen Informationen zum Öffnen zu steuern, und wobei die Gondel (102) **dadurch gekennzeichnet ist, dass** die Verkleidung (202) an die Struktur (101) zwischen einer geöffneten Stellung und einer geschlossenen Stellung gelenkig montiert ist.

2. Gondel (102) eines Luftfahrzeugs (100) nach Anspruch 1, **dadurch gekennzeichnet, dass** die Verkleidung (202) eine Luke (210) aufweist, die an der Verkleidung (202) zwischen einer geöffneten Stellung und einer geschlossenen Stellung gelenkig montiert ist.

3. Gondel (102) eines Luftfahrzeugs (100) nach einem der Ansprüche 1 oder 2, **dadurch gekennzeichnet, dass** der Kasten (206) inertisiert ist.

4. Gondel (102) eines Luftfahrzeugs (100) nach einem der Ansprüche 1 bis 3, **dadurch gekennzeichnet, dass** das Betätigungssystem (250) Scharniere (252) umfasst, die entlang einer ersten Kante (208a) der Tür (208, 508a-b) angeordnet sind.

5. Gondel (102) eines Luftfahrzeugs (100) nach Anspruch 4, **dadurch gekennzeichnet, dass** die erste Kante (208a) parallel zu einer Bewegungsrichtung (F) der Gondel (102) verläuft.

6. Gondel (102) eines Luftfahrzeugs (100) nach Anspruch 4, **dadurch gekennzeichnet, dass** es mindestens zwei Türen (508a-b) gibt, die in Bezug auf eine Bewegungsrichtung (F) der Gondel (102) hintereinander angeordnet sind, dass die erste Kante (208a) der vordersten Tür (508a) an der Rückseite der Tür (508a) liegt und dass die erste Kante (208a) der hintersten Tür (508b) an der Vorderseite der Tür (508b) liegt.

7. Gondel (102) eines Luftfahrzeugs (100) nach einem der Ansprüche 1 bis 6, **dadurch gekennzeichnet, dass** sie ein begrenzendes Mittel (402, 502a-b) umfasst, welches das Blockieren des Öffnens der Tür (208, 508a-b) gewährleistet.

8. Luftfahrzeug (100), umfassend einen Diwasserstofftank (110), eine Gondel (110) nach einem der vorhergehenden Ansprüche, eine in dem Kasten (106) angeordneten Konditionierungsvorrichtung (20), eine Leitung (112), die fluidisch zwischen dem Tank (102) und der Konditionierungsvorrichtung (20) angeschlossen ist, ein Absperrventil (114), das an der Leitung (112) montiert ist und von der Steuereinheit (54) zum Öffnen und Schließen gesteuert wird.

## Claims

1. Nacelle (102) of an aircraft (100), comprising:
- a structure (101),
- a cowl (202) mounted on the structure (101), having an inner face (202a) oriented towards the interior of the nacelle (102), and having at least one window (204),
- a box structure (206) sealingly fixed around the at least one window (204) to the inner face (202a) so as to delimit, with the cowl (202), an internal volume (50) intended to contain a conditioning device (20) provided for conditioning dihydrogen,
- for the or each window (204), a door (208, 508a-b) pivotably mounted on said cowl (202) between a closed position in which the door (208, 508a-b) blocks the window (204) and an open position in which the door (208, 508a-b) does not block the window (204),
- detection means (52) provided for detecting the presence of dihydrogen in the box structure (206) and for supplying information representative of such a presence, and
- a control unit (54),
the nacelle (102) comprising for each door (208, 508a-b), a manoeuvring system (250) comprising means for moving the door (208, 508a-b) from the closed position to the open position, the control unit (54) being arranged to command the manoeuvring system (250) to open as an function of the information supplied by the detection means (52) and the nacelle (102) being **characterized in that** the cowl (202) is pivotably mounted on the structure (101) between an open position and a closed position.

2. Nacelle (102) of an aircraft (100) according to Claim 1, **characterized in that** the cowl (202) has a hatch (210) pivotably mounted on the cowl (202) between an open position and a closed position.

3. Nacelle (102) of an aircraft (100) according to one of Claims 1 or 2, **characterized in that** the box structure (206) is rendered inert.

4. Nacelle (102) of an aircraft (100) according to one of Claims 1 to 3, **characterized in that** the manoeuvring system (250) comprises hinges (252) disposed along a first edge (208a) of the door (208, 508a-b).

5. Nacelle (102) of an aircraft (100) according to Claim 4, **characterized in that** said first edge (208a) is parallel to a direction of movement (F) of the nacelle (102).

6. Nacelle (102) of an aircraft (100) according to Claim 4, **characterized in that** there are at least two doors (508a-b) disposed one behind another with respect to a direction of movement (F) of the nacelle (102), **in that** the first edge (208a) of the frontmost door (508a) is to the rear of said door (508a) and **in that** the first edge (208a) of the rearmost door (508b) is to the front of said door (508b).

7. Nacelle (102) of an aircraft (100) according to one of Claims 1 to 6, **characterized in that** it comprises a limiting means (402, 502a-b) ensuring the blocking in the open position of the door (208, 508a-b).

8. Aircraft (100) comprising a dihydrogen tank (110), a nacelle (102) according to one of the preceding claims, a conditioning device (20) disposed in the box structure (106), a pipeline (112) fluidically connected between the tank (110) and the conditioning device (20), and a shut-off valve (114) mounted on the pipeline (112) and commanded to open and close by the control unit (54).
